# EUROPEAN PATENT APPLICATION

(11) **EP 4 768 239 A1**
(43) Date of publication of application: **01.07.2026**
(21) Application number: 25227747.0
(22) Date of filing: 30.12.2025
(51) Int. Cl.: B32B 13/04, C04B 41/00, C04B 41/50, C04B 41/65, C04B 41/85

(54) **BUILDING ARTICLE**

(30) Priority: 30.12.2024 PT 2024119962
(71) Applicant: Oprimee - Innovation Design Engineering Solutions, Lda, 3405-155 Oliveira do Hospital (PT); Associação Cecolab - Collaborative Laboratory Towards Circular Economy, 3405-155 Oliveira do Hospital (PT); Associação BLC3 - Campus de Tecnologia e Inovação, 3405-155 Oliveira do Hospital (PT)
(72) Inventor: DOS SANTOS ALMEIDA NUNES, JOÃO MIGUEL, 3405-155 OLIVEIRA DO HOSPITAL (PT); NUNES PEREIRA CID TELES, JOÃO MANUEL, 3405-155 OLIVEIRA DO HOSPITAL (PT); FRANCISCO DE FIGUEIREDO, FILIPA DANIELA, 3405-155 OLIVEIRA DO HOSPITAL (PT)
(74) Representative: Patentree

(57) **Abstract**

A building article comprising: a conventional building article comprising an inner layer of conventional formulation; and at least one pigmented protective layer applied to at least one external surface of the conventional building article, wherein the at least one pigmented protective layer comprises a mixture of pigmented water, at least one binder and at least one aggregate; wherein the at least one pigmented protective layer comprises a minimum thickness of 3 mm; wherein the at least one aggregate comprises a maximum particle size of 70% to 90% of the thickness of the at least one pigmented protective layer; and wherein the at least one pigmented protective layer is mass-pigmented throughout its thickness, such that colour is homogeneously distributed within the pigmented protective layer; wherein the pigmented protective layer is configured to allow localised surface removal of up to 0.3 mm without loss of the original aesthetic appearance.

## Description

### TECHNICAL FIELD

The present disclosure relates to a building article.

### BACKGROUND

Construction industry faces continuous challenges related to the durability, maintenance and aesthetics of the materials used, especially when exposed to aggressive environmental factors such as humidity, microorganism, possible wear and even *graffiti.* Although traditional building blocks offer structural strength, they often require additional treatments to increase their longevity and maintain their appearance.

The aesthetic appearance of the finish of building materials is one of the main factors that leads to maintenance and intervention in construction sector, over the time that building materials are used.

Microbial activity can have an important impact on the durability of building materials. It is important to understand this activity in order to select appropriate treatment strategies for the repair and restoration of buildings and monuments. A harmful effect can also extend to indoor air quality, such as microorganisms in damp buildings, or aesthetics, such as proliferations of coloured biological stains on roofs and facades. Nonetheless, microorganisms can also have a positive impact (substance healing) and their action is examined by creating bio-oriented shielding systems. Cementitious materials can come into contact with water-requiring organisms such as algae, bacteria and fungi that are essential for the growth of life in almost any wet or aqueous environment. Microbial activity can cause microstructural, mineralogical and biochemical damage, also known as biodegradation, in materials. Buildings and structures are exposed to microorganism in many places. In every situation where cementitious materials are in contact with moisture or water, they are exposed to microorganisms. When houses and buildings face this threat, water is vital for the survival of organisms. Microorganisms are pioneer and microscopic organisms in the development of life are found everywhere in soil, air and water. They are classified according to the biochemical reactions or metabolic activities in which bacteria or fungi can reproduce (multiply), grow, develop and react. Water is an important condition for the life of the microorganism when buildings and infrastructures are exposed to such a threat. Water becomes vital for microbial survival when buildings and structures face this threat.

By human action we have purposeful, such as graffiti vandalism, and unintentional, such as accidents consequence of the natural interaction between human and construction materials in quotidian. Graffiti vandalism is an unavoidable visual component of the urban fabric, resulting in the defacing of public or private properties accessible to the public. Graffiti spray paints contain xenobiotic compounds. This compounds that make the graffiti spray resistant to removal and degradation. Every year, in all parts of the world, the economic losses caused by graffiti are estimated in a million dollars. Unintentional accidents caused by human action also cause damage to the surface of materials, the vast majority of which is caused by marks with other colours.

Existing inventions and technologies to solve the problems of aesthetics, preservation and conservation, and safety, because of indoor air quality problems that can lead to health problems, are at the level of: simple washing through the use of water and mechanical action, with a numerous limitations and only solving a small part of the problem; direct painting, as a new coating; washing and disinfecting with chemicals; washing and new coating of paint; washing, disinfecting with chemicals and painting; bioremediation, through the use for example of target bacteria; manual or mechanical removal of coatings; and others similar operations.

These facts are disclosed in order to illustrate the technical problem addressed by the present disclosure.

### GENERAL DESCRIPTION

The present disclosure relates to a building article.

The disclosed technology introduces a novel approach to utilizing pigments in the production of building articles, such as precast constructive elements or modular construction, in particular blocks with different geometric configurations, forms and dimensions, pavers, pillars, beams, and others, which are produced using offering environmental advantages.

The present solution an unexpected combination of a conventional building article with a pigmented protective layer, which provides improved resistance aesthetic properties, namely to, humidity, microorganism, graffiti and unintentional human damage, among others, as well as contributing to sustainability by decrease the consumption resources and materials in maintenance.

The disclosed technology relates to a new material for construction sector, such us blocks with different geometric configurations, forms and dimensions, pavers, and others, pre-pigmented in the external surface with the compromise to decrease the maintenance and intervention to conservation the aesthetic and extend the life of materials and surface proprieties, contributions the resilience against low and high humidity environment, wet conditions, microorganism, halls cardinal direction north, unintentional human actions, and vandalism that damage the surface construction materials.

The disclosed technology contributes to the sustainability in construction by using less materials for conservations and aesthetic reparation operations, enabling the production of a construction article exhibiting simultaneous technical improvements over conventional solutions, including enhanced long-term aesthetic durability without the need for additional surface coatings, surface mechanical resistance suitable for urban and light industrial environments, chemical resistance to common exposure agents such as water, detergents and pollution, effective inhibition of microbiological colonisation in humid conditions, and intrinsic resistance to vandalism and graffiti.

The proposed building article redirects pigments for an external layer combined with water, binders, and aggregates to create articles with different geometric configurations, forms and dimensions, pavers, pillars, beams, and others, contributing to both the sustainability and profitability of the construction sector.

This novel technical solution not only contributes to the circular economy but also supports the development of more resilient, environmentally-friendly constructions materials, with a positive environment, economic and social symbiotic technology by their high contributions to decrease environmental impacts and resource consumption.

In an embodiment, construction begins with the inner layer block by the traditional method production of blocks, for example, concrete, ceramic, and other similar composition. This traditional method is known by the mixed of aggregate or inert with water and binding agent. The inner layer blocks are pre cured under controlled conditions of temperature and humidity to ensure adhesion and durability of the coating. After this process will construct the external layer, that will create a new layer, with a minimum thickness of 3 mm, it is possible to be higher, where will be use the (1) aggregate or inert with a maximum particle size of 85% of the dimension of the thickness layer, (2) binding agent, such us, cement, and (3) pigmented water, with the colour wanted, such us, white, grey, green, brown, red, blue, black. This pigmented water can be obtained by the mixed of natural or synthetic pigments dried with water, or aqueous solution pigmented from different pathways, such us, aqueous solution of algae or bacteria where we used the pigment of the microorganism with water a solution for the production of the pigment coating, or industrial pigmented wastewater, or urban pigmented wastewater, or other any type of aqueous solution of water and with coloured water. After application external layer, the article has the final cured under controlled conditions to ensure adhesion and durability of the coating.

Mass pigmentation of the protective layer produces several technical effects, including chromatic homogeneity throughout the thickness of the layer, thereby preventing visual degradation due to surface wear, enabling localised material removal for aesthetic restoration, eliminating the need for periodic repainting, and maintaining functional properties after repeated environmental ageing cycles. Additionally, the incorporation of an antimicrobial agent into the matrix of the pigmented layer results in a significant reduction in the colonisation of bacteria, fungi and algae, prevents the formation of surface biofilms, and improves surface hygiene in both indoor and outdoor environments, while also contributing to indoor air quality and aesthetic preservation by reducing the need for cyclical maintenance operations involving chemical products that are typically associated with the release of volatile organic compounds over the service life of the construction article.

Moreover, the pigmented layer exhibits functional stability under thermal cycling between cold and hot conditions, prolonged exposure to humidity, ultraviolet radiation, and repeated wetting and drying cycles, such stability contributing to a prolonged service life estimated to be at least 30 years under normal urban environmental conditions.

The same vision and capacity are possible observed and comparable with the use of natural stone blocks in construction sector, where over the years and due to environmental conditions, they lose their initial aesthetic quality and presents ageing. However, because their interior composition and layer is very similar to the exterior, only by pressure washing with water or using some mechanical means of sanding, scraping or chipping the surface is it possible to recover the block's initial appearance, and only by removing surface layers of less than 0.1 - 0.3 mm. The same is true if the natural stone has been graffitied. It is possible, and only in the graffiti area, to intervene to eliminate this vandalism, to restore the initial appearance and there is no need to intervene on the entire surface or spend other resources to restore the desired aesthetics. The same effectiveness can also be achieved with the use of stripping chemicals.

This disclosure also describes a process for producing building articles characterized by having an inner layer of conventional formulation, with an external layer of coating derived from the integration of pigments in the formulation of the material, which can be single-sided or double-sided. The process aims to improve the traditional characteristics of building articles, providing resistance to various factors, namely humidity, environment conditions, microorganism, graffiti and unintentional human damage, among other, but in a way that does not compromise their structural properties.

Resistance to vandalism and graffiti does not rely on removable surface films but on an intrinsic structural effect of the invention, thereby enabling graffiti removal by physical or mild chemical methods while preserving the original appearance of the construction article after cleaning and significantly reducing urban maintenance requirements, with a consequent positive impact on the functional and aesthetic performance of built environments. The disclosed building article simultaneously addresses issues of aesthetic maintenance, durability, microbiological resistance and environmental sustainability without compromising the structural properties of the base construction article, thereby providing an integrated and inventive technical solution compared with conventional construction materials and surface treatment approaches.

In an embodiment, the pigmented protective layer is applied over the conventional formulation article, creating a durable and aesthetically attractive surface.

In an embodiment, the protective layer is produced from the integration dried pigmented formulation or liquid pigmented formulation. The pigments can be functionalized by antimicrobial compounds for inactivation and decaying of bacteria, algae and fungi.

In an embodiment, the new material developed can be applied for modular construction or traditional construction, take into account, that is applied a different design and configuration elements constructive.

In an embodiment, the pigmented protective layer not only offers functional advantages to microorganisms, such as resistance to adverse environmental factors such as, temperature, relative humidity, O₂, CO, CO₂, SO_{X}, NO_{X} air concentration and UV radiations, to humidity, environment conditions, microorganism, graffiti and unintentional human damage, halls and superficies in north cardinal direction, among other and other external agents.

In an embodiment, building blocks characterized by having a conventionally formulated inner layer, with an external coating layer pigmented, which can be single or double sided, can be applied to walls, roofs and floors, as they are blocks with high resistance to humidity, and in urban environments subject to wear and tear, as the formulated mixture offers materials with resistance, durability and low maintenance requirements, preserve the aesthetics of the construction materials.

An aspect of the disclosure comprises a building article with improved chemical and mechanical resistance comprising: a conventional building article with at least one pigmented protective layer applied to at least one external surface of said conventional building article, wherein the conventional building article comprises an inner layer of conventional formulation; wherein the at least one pigmented protective layer comprises a mixture of pigmented water, at least one binder and at least one aggregate; wherein the at least one pigmented protective layer comprises a minimum thickness of 3 mm; wherein the at least one aggregate comprises a maximum particle size of 70% to 90% of the thickness of the at least one pigmented protective layer.

An aspect of the disclosure comprises a building article comprising: a conventional building article comprising an inner layer of conventional formulation; and at least one pigmented protective layer applied to at least one external surface of the conventional building article, wherein the at least one pigmented protective layer comprises a mixture of pigmented water, at least one binder and at least one aggregate; wherein the at least one pigmented protective layer comprises a minimum thickness of 3 mm; wherein the at least one aggregate comprises a maximum particle size of 70% to 90% of the thickness of the at least one pigmented protective layer; and wherein the at least one pigmented protective layer is mass-pigmented throughout its thickness, such that colour is homogeneously distributed within the pigmented protective layer; wherein the pigmented protective layer is configured to allow localised surface removal of up to 0.3 mm without loss of the original aesthetic appearance.

In an embodiment, the pigmented protective layer of the building article comprises a thickness ranging from 3 mm to 15 cm, preferably from 3 mm to 10 cm.

In an embodiment, the binding agent of the building article comprises cement.

In an embodiment, the pigmented water of the building article is obtained by the mixture of natural or synthetic pigments dried with water.

In an embodiment, the pigmented water of the building article is obtained by mixing water with at least one natural or synthetic pigment in solid form.

In an embodiment, the pigmented water of the building article comprises an aqueous pigmented solution of biological origin, selected from pigments produced by algae, bacteria and/or fungi.

In an embodiment, the pigmented water of the building article comprises an aqueous pigmented solution of biological origin, selected from pigments produced by algae, bacteria and/or fungi.

In an embodiment, the pigmented water of the building comprises an aqueous pigmented solution originating from an industrial or urban process, containing dissolved or dispersed colouring compounds.

In an embodiment, the pigmented water of the building article is obtained by an aqueous solution of algae, bacteria and fungi.

In an embodiment, the pigmented protective layer of the building article comprises an antimicrobial agent to inhibit the growth of microorganisms.

In an embodiment, the building article further comprises functional additives to improve the mechanical strength and durability of the pigmented protective layer.

In an embodiment, the conventional building article of the building article is selected from a list consisting of a block, a stone, a brick, and their combinations thereof.

It is also disclosed a building comprising the building article described along the disclosure.

It is also disclosed an urban sidewalk construction comprising the building article described along the disclosure.

### BRIEF DESCRIPTION OF THE DRAWINGS

The following figures provide preferred embodiments for illustrating the disclosure and should not be seen as limiting the scope of invention.

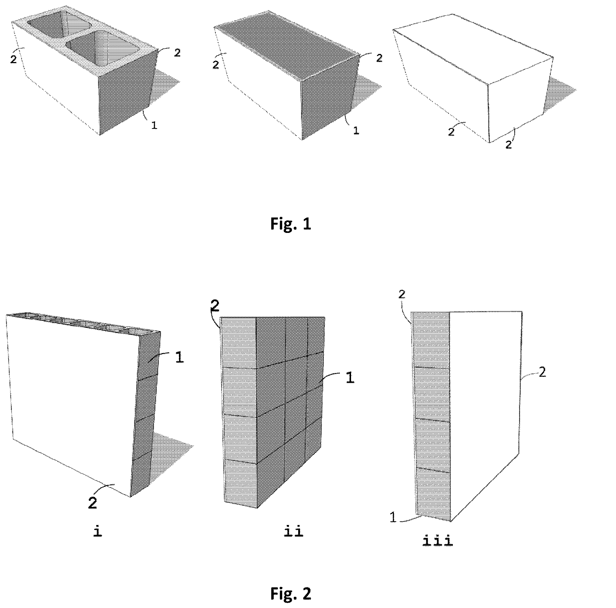

**Figure 1****:** Schematic representations of an embodiment of a building article, comprising a base construction element (1) having an inner layer (1) of conventional formulation, and at least one pigmented protective layer (2) applied on an external surface of the base construction element (1).
**Figure 2****:** Schematic representations of different configurations of application of a building article, including (i) a front view of a base construction element (1) provided with a pigmented protective layer (2), applied on a first external face, (ii) a rear view of the same base construction element (1), illustrating unilateral application of the pigmented protective layer (2), and (iii) a schematic view of a base construction element (1) provided with two pigmented protective layers (2), applied on opposite faces.

### DETAILED DESCRIPTION

The present disclosure relates to a building article.

Figure 1 depicts the general concept of the technology, describing the process of producing building articles composed from one pigmented protective layer (2) or for pigmented protective two layers. The two pigmented protective layers are composed of an inner layer (1) of conventional formulation, covered by a pigmented protective layer (2) derived from a pigmented formulation. This external layer, either single or double-sided, is pigmented and provides additional properties of resistance to humidity, environment conditions, microorganism, graffiti and unintentional human damage, halls and superficies in north cardinal direction, among other and other external agents with minimum 3 mm thickness pigmented layer.

In an embodiment, the pigmented protective layer may comprise a formulation based on a mixture of: an aggregate or inert material in an amount of 55 - 75 % by mass; a hydraulic binder in an amount of 15 - 30 % by mass; water, including pigmented water, in an amount of 10 - 20 % by mass; and at least one pigment of natural, synthetic or biological origin in an amount of 0.1 - 5 % by mass relative to the binder; wherein the exact proportions are adjusted as a function of the aggregate particle size distribution, the thickness of the pigmented layer, the desired colour and chromatic intensity, and the selected application method.

Although the application defines the maximum aggregate particle size as 70 - 90% of the thickness of the pigmented layer, in an embodiment the particle size distribution of the aggregate is characterised by: fine fraction of less than 0.5 mm in an amount of 20 - 40 % by mass; a medium fraction of from 0.5 mm to 2 mm in an amount of 30 - 50 % by mass; and a coarse fraction of 2 mm or greater, up to the maximum admissible particle size, in an amount of 10 - 30 % by mass; wherein such particle size distribution provides suitable workability, adequate adhesion to the underlying substrate, and resistance to surface wear.

In an embodiment, the pigmented protective layer is designed so as not to compromise the overall mechanical strength of the construction article while functioning as a superficial functional layer and, in preferred embodiments, the formulation of the pigmented layer exhibits a compressive strength of at least 15 MPa, preferably at least 25 MPa, as determined on test specimens representative of the formulation, together with an abrasion resistance compatible with applications in façades, pavements or other exposed elements, maintaining its integrity after localised surface wear.

In an embodiment, the pigmented layer contributes to surface durability without compromising the structural function of the base construction element. Reference technical parameters include: a compressive strength of the pigmented layer ranging from 20 to 35 MPa; a surface flexural strength of at least 4 MPa; and abrasion resistance characterised by a mass loss of less than 3 % after 1,000 cycles of mechanical wear.

Such values render the solution suitable for use in exposed façades, urban pavements and prefabricated blocks and panels.

In an embodiment, the adhesion between the conventional inner layer and the pigmented protective layer is ensured by a combination of factors including application of the pigmented layer onto a substrate that is pre-cured but still chemically reactive, and/or controlled surface roughness of the substrate, wherein effective adhesion between the inner layer of conventional formulation and the pigmented protective layer is promoted by a controlled surface roughness of the substrate, which is configured to enhance mechanical interlocking and physico-chemical compatibility between the layers.

In an embodiment, the surface of the base construction element exhibits: an arithmetic mean surface roughness (Ra) ranging from 0.8 µm to 5.0 µm, preferably from 1.5 µm to 3.5 µm; and a mean profile height (Rz) ranging from 5 µm to 40 µm, preferably from 10 µm to 25 µm.

These values ensure meeting an adequate balance between an increase in the specific contact surface area, partial penetration of the paste of the pigmented layer into the substrate, prevention of interfacial discontinuities or voids and mineralogical compatibility between the binder of the substrate and the binder of the pigmented protective layer. The defined surface roughness enables the achievement of a tensile adhesion strength at the interface between layers of at least 0.8 MPa, preferably at least 1.2 MPa, and an absence of delamination after exposure to wetting and drying cycles, thermal cycling, accelerated environmental ageing and monolithic mechanical behaviour of the construction article throughout its service life.

The definition of specific surface roughness ranges allows for the achievement of robust adhesion without the use of primers or additional adhesive layers; a reduction in process steps; the assurance of industrial repeatability; and reinforcement of the sufficiency of disclosure of the invention.

The controlled surface roughness of the substrate may be obtained by one or more of the following methods, applied individually or in combination: demoulding using formworks having a controlled surface texture; mechanical surface brushing; low-intensity abrasive blasting; pressure washing of the substrate after pre-curing; and/or direct moulding with partially exposed aggregates.

In an embodiment, the pigmented layer is applied when the substrate is pre-cured while still exhibiting residual surface reactivity and having a controlled surface moisture content ranging from 4 % to 8 % by mass. Wherein this condition, in combination with the defined surface roughness, promotes additional physico-chemical bonding, improved interfacial cohesion and increased durability of the interface.

In an embodiment, the pigmented layer may be applied by direct moulding simultaneously with the base block, mechanical projection, manual or mechanised spreading or application by surface formwork. The application may be unilateral or bilateral, and continuous or localised only on exposed surfaces.

After application, the pigmented layer may be subjected to controlled curing conditions including: a temperature ranging from 10 °C to 30 °C; a relative humidity of at least 70 %; an initial curing time of from 24 to 72 hours; and a final curing period of up to 28 days, depending on the binder used.

Such curing conditions ensure adequate hydration of the binder, development of mechanical strength and chromatic stability of the pigmented layer.

In an embodiment the formulation of the pigmented layer is adjusted so as to exhibit a water absorption by capillarity of no more than 8 % by mass, preferably no more than 5 % by mass, and an adjustable hydrophilic or hydrophobic behaviour through the use of functional additives.

In an embodiment, the pigmented protective layer may exhibit high surface chemical resistance, making it suitable for use in urban and light industrial environments. More specifically, reference laboratory tests include exposure to aqueous solutions having a pH ranging from 3 to 11 for a period of 28 days, and cyclic contact with common agents including household detergents, de-icing salts and light mineral oils. The observed results include absence of visible pigment leaching, absence of significant surface degradation; and colour variation (ΔE) of less than 2 following accelerated chemical ageing.

In an embodiment, an antimicrobial agent may be selected from a list consisting of silver, copper or zinc-based compounds, mineral biocidal agents, and natural compounds of plant or microbial origin. The antimicrobial agent is typically present in a concentration ranging from 0.1 % to 2 % by mass relative to the binder of the pigmented layer and may be incorporated directly into the mixture or by functionalisation of the pigmented phase.

In an embodiment, the pigmented layer may incorporate a functional antimicrobial agent homogeneously integrated within the mineral matrix, from 0.2% to 1.5% by mass relative to the binder of the pigmented layer. In preferred embodiments, the antimicrobial agent is selected from: mineral compounds based on silver, copper or zinc; encapsulated inorganic biocidal agents; and natural or bio-inspired antimicrobial compounds compatible with cementitious matrices.

Reference microbiological evaluations include prolonged exposure to humid environments having a relative humidity greater than 90 % and inoculation with fungi and bacteria commonly found on façades and in indoor environments. Observed results include a reduction of at least 99% in surface microbiological colonisation, absence of visible biofilm formation and maintenance of colour and surface texture after repeated wetting and drying cycles.

In an embodiment, the pigmented layer is designed for use in severe outdoor environments. Simulated accelerated ageing tests include thermal cycling between -10°C and +50 °C, repeated wetting and drying cycles and prolonged exposure to ultraviolet radiation. Observed performance includes absence of surface cracking, dimensional stability and limited chromatic degradation, with a colour variation (ΔE) of less than 3 after accelerated ageing cycles.

Resistance to vandalism and graffiti results from an intrinsic technical effect of the invention and is based on mass pigmentation of the pigmented layer, chromatic homogeneity throughout the thickness of the layer, and the absence of a conventional superficial film or coating, thereby enabling localised surface removal by abrasion, pressure washing or mild chemical stripping. Simulated application tests include the application of acrylic- and solvent-based spray paints, followed by removal through pressure washing, localised abrasion and mild chemical stripping. The resistance to graffiti is thus demonstrated by constructive principle and technical effect, comparable to that observed in natural stone materials. Observed results include effective removal of graffiti without the need for repainting, the possibility of aesthetic restoration by removal of less than 0.3 mm of the surface, and maintenance of the original appearance of the construction article.

Based on the physical, chemical and functional mechanisms described herein, the service life of the pigmented layer is comparable to that of the base construction element and is estimated to be at least 30 years under normal urban environmental conditions, and at least 20 years under aggressive environments including high humidity and direct exposure, such durability being achievable with minimal maintenance and without the need for periodic repainting, while significantly reducing maintenance interventions, the consumption of paints and additional surface coatings, and the environmental impact over the life cycle of the construction article.

These materials are suitable for a variety of applications, including urban sidewalk construction, where dirt or graffiti can be easily removed, avoiding the need for repainting. In addition, it is ideal for high humidity environments or wet conditions in which fungal growth is a problem, providing environmentally friendly alternatives to chemical treatments.

Figure 2 shows examples of the application of building articles in wall construction, with an inner layer (1) and an outer layer (2) of coverings seen from the front (i) and from the back (ii); and with an inner layer (1) and two external layers (2) of coverings (iii).

In an embodiment, the construction article comprises prefabricated blocks provided with a white pigmented layer and applied in an urban façade exposed to north-facing orientation, elevated humidity and urban pollution, wherein the pigmented layer contributes to long-term aesthetic stability and inhibits the formation of biological staining under such environmental conditions.

In an embodiment, the construction article is implemented as urban paving elements comprising a grey pigmented layer and subjected to intensive pedestrian traffic and potential graffiti exposure, wherein the pigmented layer provides high resistance to surface wear, facilitates cleaning operations and enables aesthetic recovery following localised surface treatment.

Another example of application is in the construction of bathrooms, where there are major problems of aesthetics and durability of materials are caused by fungi and bacteria on surfaces. The above examples are not limiting, since the building elements can be applied in various contexts, such as durable and aesthetically pleasing paving for urban infrastructures, namely streets, sidewalks and squares; building construction, since after the application of the outer layer, the blocks are more resistant to humidity; paving and/or blocks that are easy to clean, without the need for repainting; blocks that maintain structural integrity when punctured or subjected to wear and tear.

The pigmented protective layer not only improves aesthetics, giving vibrant and long-lasting colours, but also offers resistance to environmental factors and vandalism.

In areas exposed to extreme weather conditions or wear, additional coatings can be applied to improve resistance to moisture, wear and graffiti.

Building materials made with a pigmented protective layer, and one or two layers can be applied to improve resistance to environmental and human factors and increase safety in sensitive applications.

In addition, this technology contributes for the increase market of the modular construct building materials. Modular construct building materials contribute for decrease environment impacts comparatively with traditional construction, more efficiency use of the resources, circular economy, less labour required and faster construction.

In an embodiment, the blocks' predominant colour is white and grey, but we have others colours applied in construction sector. This invention contributes to their durability, less resources consumption in the (1) application phase, if will wanted an addition painting finishing of the material, with the coating layer pigmented the consumption of paint product is less and more efficient, because the traditional painting process of hall, roof or floors, need 2 or 3 or more hand applications, (2) maintenance activities of building materials, or (3) intervention activity, providing advantages over traditional building materials. By integrating pigments with the colour that are wanted, this innovation solves environmental and societal challenges, promoting sustainable practices in construction sector and durability of the materials and the aesthetic conservation.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A building article comprising:
a conventional building article comprising an inner layer of conventional formulation; and
at least one pigmented protective layer applied to at least one external surface of the conventional building article, wherein the at least one pigmented protective layer comprises a mixture of pigmented water, at least one binder and at least one aggregate;
wherein the at least one pigmented protective layer comprises a minimum thickness of 3 mm;
wherein the at least one aggregate comprises a maximum particle size of 70% to 90% of the thickness of the at least one pigmented protective layer; and
wherein the at least one pigmented protective layer is mass-pigmented throughout its thickness, such that colour is homogeneously distributed within the pigmented protective layer;
wherein the pigmented protective layer is configured to allow localised surface removal of up to 0.3 mm without loss of the original aesthetic appearance.

2. The building article according to the previous claim, wherein the pigmented protective layer comprises a thickness ranging from 3 mm to 15 cm, preferably from 3 mm to 10 cm.

3. The building article according to any of the previous claims, wherein the binding agent comprises cement.

4. The building article according to any of the previous claims, wherein the pigmented water is obtained by the mixture of natural or synthetic pigments dried with water.

5. The building article according to any of the previous claims, wherein the pigmented water is obtained by mixing water with at least one natural or synthetic pigment in solid form.

6. The building article according to any of the previous claims 1 to 4, wherein the pigmented water comprises an aqueous pigmented solution of biological origin, selected from pigments produced by algae, bacteria and/or fungi.

7. The building article according to any of the previous claims 1 to 4, wherein the pigmented water comprises an aqueous pigmented solution of biological origin, selected from pigments produced by algae, bacteria and/or fungi.

8. The building article according to any of the previous claims 1 to 4, wherein the pigmented water comprises an aqueous pigmented solution originating from an industrial or urban process, containing dissolved or dispersed colouring compounds.

9. The building article according to any of the previous claims, 1 to 4, wherein the pigmented water is obtained by an aqueous solution of algae, bacteria and fungi.

10. The building article according to any of the previous claims, wherein the pigmented protective layer comprises at least one antimicrobial agent intended to inhibit the growth of microorganisms.

11. The building article according to any of the previous claims, further comprising functional additives to improve the mechanical strength and durability of the pigmented protective layer.

12. The building article according to any of the previous claims, wherein the conventional building article is selected from a list consisting of a block, a stone, a brick, and their combinations thereof.

13. A building comprising the building article described in any of the previous claims.

14. An urban sidewalk construction comprising the building article described in any of the previous claims 1 to 12.
